# FASCICULE DE BREVET EUROPEEN

(11) **EP 1 857 026 B1**
(45) Date de publication et mention de la délivrance du brevet: **27.10.2010**
(21) Numéro de dépôt: 07108361.2
(22) Date de dépôt: 16.05.2007
(51) Int. Cl.: A47J 27/04

(54) **Appareil électroménager de cuisson à la vapeur à cycle de chauffage régulé**
Elektrisches Haushaltsgerät zum Dampfgaren mit reguliertem Heizzyklus
Domestic steam-cooker with adjustable heating cycle

(30) Priorité: 19.05.2006 FR 0651861
(43) Date de publication de la demande: 21.11.2007
(73) Titulaire: SEB SA, 69130 Ecully (FR)
(72) Inventeur: Dumoux, Philippe, 21120, GEMEAUX (FR); Sobole, Céline, 21490, CLENAY (FR)
(74) Mandataire: Blanchard, Eugène Gilles

(56) Documents cités:
- EP-A2- 1 427 256
- US-A1- 2002 031 596

## Description

La présente invention concerne le domaine technique des appareils électroménagers conçus pour permettre une cuisson à la vapeur d'aliments divers.

Le document EP 1 427 256 décrit un tel appareil selon la préambule de la revendication 1.

De tels appareils électroménagers de cuisson à la vapeur comprennent en général au moins une enceinte de cuisson associée à des moyens de production de vapeur qui comprennent au moins un élément chauffant électrique et des moyens de commande et d'alimentation de l'élément chauffant. L'élément chauffant électrique est alors destiné à porter à ébullition une quantité d'eau disposée directement dans l'enceinte de cuisson ou dans un réservoir communiquant avec l'enceinte de cuisson. Le plus souvent, il est utilisé un élément chauffant électrique présentant une puissance suffisante pour porter rapidement l'eau à ébullition de manière à offrir un certain confort d'utilisation. Cependant, une fois l'enceinte de cuisson remplie de vapeur, la forte puissance de l'élément chauffant devient une source d'inconfort dans la mesure où elle induit une surproduction de vapeur qui s'échappe de l'enceinte de cuisson et humidifie de manière inutile l'environnement de cette dernière. De plus, la forte puissance de l'élément chauffant induit une importante consommation électrique ainsi qu'un épuisement prématuré de la réserve d'eau de l'appareil électroménager.

Il est donc apparu le besoin d'un nouveau type d'appareils électroménagers de cuisson à la vapeur qui permette de réduire les dégagements de vapeur à l'extérieur de l'enceinte, et la consommation électrique ainsi que d'augmenter l'autonomie de l'appareil, tout en conservant des performances de cuisson satisfaisantes.

Afin d'atteindre cet objectif, une demande de brevet FR 2 823 962 a proposé un appareil électroménager de cuisson à la vapeur comprenant un système de détection de la vapeur présente dans l'enceinte de cuisson afin de limiter la puissance de l'élément électrique chauffant. Si un tel appareil électroménager permet effectivement d'obtenir une réduction de la quantité de vapeur dégagée à l'extérieur de l'enceinte de cuisson, ainsi qu'une réduction de la consommation électrique, sa conception relativement élaborée augmente substantiellement son prix de revient par rapport au prix de revient d'un appareil dépourvu de moyens de détection de la vapeur présente dans l'enceinte de cuisson.

Il est donc apparu le besoin d'un appareil électroménager de cuisson à la vapeur qui permette de réduire les dégagements de vapeur à l'extérieur de l'enceinte et la consommation électrique ainsi que d'augmenter l'autonomie de l'appareil, tout en conservant des performances de cuisson satisfaisantes et en présentant un coût de fabrication inférieur à celui d'un appareil équipé d'un système de détection de vapeur.

Afin d'atteindre cet objectif, l'invention concerne un appareil électroménager de cuisson à la vapeur d'aliments comprenant au moins une enceinte de cuisson modulaire comportant au moins un récipient principal et au moins un couvercle amovible adaptable sur le dessus du récipient principal, des moyens de production de vapeur comprenant des moyens de chauffe électriques associés à un réservoir d'eau et des moyens de commande et d'alimentation des moyens de chauffe électriques qui comprennent des moyens externes de réglage, par un utilisateur, d'un temps de fonctionnement. Selon l'invention, cet appareil électroménager de cuisson à la vapeur est **caractérisé en ce que** les moyens de commande sont adaptés pour assurer le fonctionnement des moyens de chauffe électriques selon au moins un cycle de fonctionnement comprenant au moins trois phases de fonctionnement consécutives dans les conditions suivantes :
■ les trois premières phases de fonctionnement au moins possèdent chacune une durée supérieure ou égale à deux minutes et de préférence supérieure ou égale à cinq minutes,
■ l'avant-dernière phase de fonctionnement possède une durée de déroulement prédéfinie indépendante des moyens externes de réglage et le passage de l'avant-dernière phase de fonctionnement à la dernière phase de fonctionnement s'effectue de manière automatique au terme de la durée de déroulement prédéfinie de l'avant-dernière phase,
■ la puissance moyenne délivrée par les moyens de chauffe électriques au cours de l'une des phases de fonctionnement suivant la première phase de fonctionnement est strictement inférieure à la puissance moyenne délivrée par les moyens de chauffe électriques au cours de la première phase de fonctionnement,
■ et la puissance moyenne délivrée par les moyens de chauffe électriques au cours de la dernière phase de fonctionnement est non nulle.

Selon l'invention les moyens externes de réglage peuvent permettre à un utilisateur et selon le mode de réalisation de l'appareil de cuisson, soit de régler la durée totale des phases de fonctionnement précédant l'avant dernière phase de fonctionnement, soit de régler la durée totale de l'ensemble des phases de fonctionnement sans toutefois affecter la valeur de la durée de déroulement prédéfinie de l'avant dernière phase de fonctionnement.

Par ailleurs, la réduction de la puissance moyenne délivrée par les moyens de chauffe électriques dans les phases de fonctionnement consécutives à la première phase de fonctionnement permet, de manière avantageuse, de réduire la consommation électrique et la production de vapeur. De plus, le passage automatique de l'avant-dernière phase de fonctionnement à la dernière phase de fonctionnement, uniquement sur la base de la durée de déroulement de l'avant-dernière phase présente l'avantage d'assurer une régulation de fonctionnement des moyens de chauffe électriques sans qu'il soit nécessaire de faire appel à des systèmes de capteurs onéreux. À cet égard, il doit être noté que les inventeurs ont eu le mérite de mettre en évidence le fait que, pour un volume d'enceinte de cuisson donnée, il est possible d'obtenir des qualités de cuisson satisfaisantes simplement en régulant la puissance des moyens de chauffe électriques sur des intervalles de temps prédéfinis sans qu'il soit nécessaire de réguler cette puissance sur la base d'informations fournies par des capteurs de température ou de présence de vapeur. Ainsi, l'appareil selon l'invention peut-être d'une construction simple et être dépourvu de moyens de détection de présence de vapeur tel qu'un détecteur de vapeur associé ou non à des canaux pour canaliser la vapeur vers ce détecteur.

De plus, il doit être souligné que l'association des moyens de chauffe électriques au réservoir d'eau garantit la production de vapeur indépendamment de la nature ou de la température des aliments disposés dans l'enceinte de cuisson, la fonction de moyens de chauffe électriques étant essentiellement de chauffer l'eau du réservoir et non pas de chauffer directement les aliments.

Ainsi, selon une autre caractéristique de l'invention permettant d'obtenir des qualités de cuisson satisfaisantes pour de nombreuses variétés d'aliments avec un même appareil électroménager de cuisson à la vapeur, les phases de fonctionnement possèdent une durée prédéfinie et les moyens de commande sont adaptés pour que le passage de la première phase de fonctionnement à la deuxième phase s'effectue de manière automatique au terme de la durée de déroulement de la première phase, ainsi que le passage de la deuxième phase de fonctionnement à la troisième phase s'effectue de manière automatique au terme de la durée de déroulement de la deuxième phase.

Selon une caractéristique supplémentaire de l'invention, à partir de la deuxième phase de fonctionnement, la puissance moyenne délivrée par les moyens de chauffe électriques, au cours d'une phase de fonctionnement, est réduite d'une valeur inférieure ou égale à 50 % et, de préférence, comprise entre 25 % et 45 % de la valeur de la puissance moyenne délivrée par l'élément chauffant au cours de la phase de fonctionnement précédente.

Un tel mode de fonctionnement de l'appareil de cuisson permet tout à la fois : une cuisson rapide en réduisant le temps de montée en température, une limitation des dégagements de vapeur à l'extérieur et une augmentation de l'autonomie de l'appareil résultant de la réduction de puissance dès la deuxième phase.

Dans le même sens et selon une autre caractéristique de l'invention, les deux premières phases possèdent une durée prédéfinie inférieure ou égale à 10 min et de préférence inférieure ou égale à 7 min.

Selon encore une autre caractéristique de l'invention permettant d'optimiser encore plus le fonctionnement de l'appareil électroménager de cuisson à la vapeur, le cycle de fonctionnement comprend au moins quatre phases de fonctionnement et :
■ la puissance moyenne délivrée par les moyens de chauffe électriques, au cours de la deuxième phase de fonctionnement, est comprise entre 50 % et 65 % de la puissance moyenne délivrée par les moyens de chauffe électriques au cours de la première phase de fonctionnement,
■ la puissance moyenne délivrée par les moyens de chauffe électriques, au cours de la troisième phase de fonctionnement, est comprise entre 65 % et 80 % de la puissance moyenne délivrée par les moyens de chauffe électriques au cours de la deuxième phase de fonctionnement,
■ la puissance moyenne délivrée par les moyens de chauffe électriques, au cours de la quatrième phase de fonctionnement, est comprise entre 70 % et 75 % de la puissance moyenne délivrée par les moyens de chauffe électriques au cours de la troisième phase de fonctionnement.

Selon une autre caractéristique de l'invention visant également à optimiser au mieux le fonctionnement et la consommation électrique de l'appareil électroménager de cuisson à la vapeur, le cycle de fonctionnement comprend au moins quatre phases de fonctionnement et :
■ la puissance moyenne délivrée par les moyens de chauffe électriques, au cours de la deuxième phase de fonctionnement, est comprise entre 50 % et 65 % de la puissance moyenne délivrée par les moyens de chauffe électriques au cours de la première phase de fonctionnement,
■ la puissance moyenne délivrée par les moyens de chauffe électriques, au cours de la troisième phase de fonctionnement, est comprise entre 45 % et 50 % de la puissance moyenne délivrée par les moyens de chauffe électriques au cours de la première phase de fonctionnement,
■ la puissance moyenne délivrée par les moyens de chauffe électriques, au cours de la quatrième phase de fonctionnement, est comprise entre 30 % et 40 % de la puissance moyenne délivrée par les moyens de chauffe électriques au cours de la première phase de fonctionnement.

Selon encore une autre caractéristique de l'appareil électroménager de cuisson à la vapeur conforme à l'invention, les moyens de commande comprennent un organe de commande accessible à un utilisateur pour déclencher une séquence de fonctionnement, dite de relance, d'une durée inférieure ou égale à la durée de la première phase de fonctionnement et pendant laquelle les moyens de chauffe électriques délivrent une puissance moyenne comprise entre 80 % et 100 % de la puissance moyenne délivrée par les moyens de chauffe électriques pendant la première phase de fonctionnement.

Lorsque l'utilisateur a retiré le couvercle pour effectuer un contrôle du niveau de cuisson du ou des aliments disposés dans l'enceinte de cuisson, la présence d'un tel dispositif de déclenchement d'un cycle de relance permet, de manière fort avantageuse, de procéder à une remontée en température plus rapide de l'enceinte de cuisson après la remise en place du couvercle, grâce à un débit de vapeur plus important.

Selon encore une autre caractéristique de l'invention, les moyens de commande :
■ comprennent une minuterie réglable par un utilisateur pour déterminer, en fonction du contenu de l'enceinte de cuisson, la durée totale d'un premier cycle de fonctionnement, dit cycle de cuisson,
■ et sont adaptés pour, au terme du cycle de cuisson, soit interrompre l'alimentation des moyens de chauffe électriques, soit engager un cycle de fonctionnement des moyens de chauffe électriques assurant un maintien au chaud du contenu de l'enceinte de cuisson.

La présence d'une minuterie réglable, mécanique ou électronique, permet à l'utilisateur de cuire des aliments sans devoir effectuer une surveillance continue du fonctionnement de l'appareil électroménager de cuisson à la vapeur conforme à l'invention. Dans une forme préférée de réalisation et afin d'obtenir une conception simple et peu onéreuse, le réglage de la minuterie et la temporisation qu'elle réalise n'influent pas sur les durées prédéfinies des phases de fonctionnement des moyens de chauffe électriques, si ce n'est en interrompant la phase de fonctionnement en cours lorsque la minuterie achève le décompte de la durée de cuisson choisie par l'utilisateur.

Dans ce cas, l'appareil électroménager de cuisson à la vapeur selon l'invention offre une possibilité de cycle de maintien au chaud, conformément à une variante préférée de réalisation, ce cycle de maintien au chaud comprendra une phase, dite de refroidissement partiel, d'une durée prédéfinie comprise entre 10 min et 20 min, et de préférence comprise entre 12 min et 16 min, pendant laquelle l'alimentation des moyens de chauffe électriques est interrompue, la phase de refroidissement partiel étant suivie d'une phase dite de maintien pendant laquelle la puissance moyenne délivrée par les moyens de chauffe électriques possède une valeur inférieure à 30%, de préférence comprise entre 20% et 30% et, de manière plus particulièrement préférée, de l'ordre de 25 % de la puissance moyenne délivrée par les moyens de chauffe électriques pendant la première phase de fonctionnement.

La mise en oeuvre d'une phase de refroidissement permet d'éviter une surcuisson ou cuisson excessive des aliments. Les inventeurs ont, à cet égard, eu le mérite de mettre en évidence qu'une interruption d'une durée comprise entre 10 min et 20 min permet un refroidissement suffisant pour ralentir voire stopper la cuisson sans toutefois descendre en dessous d'une température de l'ordre de 65°C. Dans le même sens, la phase de maintien au chaud contribue alors à maintenir l'enceinte de cuisson et son contenu à une température supérieure à 65°C, température évitant le développement des bactéries, et néanmoins inférieure aux températures de cuisson des aliments.

Selon une caractéristique de l'invention, pendant la phase de maintien au chaud, l'alimentation des moyens de chauffe électriques est hachée de manière que la phase de maintien au chaud est constituée par une alternance de temps de chauffe pendant lesquels les moyens de chauffe électriques sont alimentés et de temps d'extinction pendant lesquels les moyens de chauffe électriques ne sont pas alimentés. De manière préférée mais non nécessaire, la durée de chaque temps d'extinction sera choisie pour être différente de la durée de la phase de refroidissement, de préférence pour être supérieure à la durée de la phase de refroidissement et, de manière plus particulièrement préférée, supérieure à 1,5 fois la durée de la phase de refroidissement.

Dans le cas où l'appareil électroménager de cuisson à la vapeur selon l'invention offre une possibilité de cycle de maintien au chaud et selon une autre caractéristique de l'invention, les moyens de commande comprennent un organe de commande accessible à un utilisateur pour activer et/ou désactiver l'engagement du cycle de maintien au chaud au terme du cycle de cuisson.

Selon encore une autre caractéristique de l'invention et afin d'offrir une possibilité de maintien au chaud indépendamment des caractéristiques de fonctionnement de la première phase et des éventuelles autres phases de fonctionnement qui lui font suite, les moyens de commande sont adaptés pour que :
■ l'avant-dernière phase de fonctionnement présente une durée prédéfinie comprise entre 10 min et 20 min, et de préférence comprise entre 12 min et 16 min, pendant laquelle l'alimentation des moyens de chauffe électriques est interrompue,
■ le passage à la dernière phase de fonctionnement s'effectue de manière automatique au terme de la durée prédéfinie de l'avant-dernière phase de fonctionnement,
■ pendant la dernière phase de fonctionnement, la puissance moyenne délivrée par les moyens de chauffe électriques possède une valeur comprise entre 20% et 30% et de préférence de l'ordre de 25 % de la puissance moyenne délivrée par les moyens de chauffe électriques pendant la première phase de fonctionnement.

Dans une forme préférée de réalisation, les moyens de commande seront alors adaptés pour que la dernière phase de fonctionnement possède une durée inférieure ou égale à 45 minutes.

Selon une autre caractéristique de l'invention, l'enceinte de cuisson de l'appareil de cuisson est modulaire et comprend un récipient principal , un récipient additionnel amovible disposé sur le récipient principal et un couvercle amovible adaptable sur le dessus du récipient additionnel et sur le dessus du récipient principal, le récipient additionnel présentant un volume inférieur ou égal à 50%, et de préférence inférieur ou égal à 33%, du volume défini par le récipient principal recouvert par le couvercle. Il a été constaté que l'ajout ou le retrait du récipient additionnel possédant un tel volume n'affecte pas les performances de cuisson de l'appareil selon l'invention et qu'il est possible lors de l'utilisation de l'enceinte de cuisson dans sa configuration complète d'obtenir une bonne cuisson des aliments placés dans le récipient principal et dans le récipient additionnel.

Par ailleurs, selon l'invention, les moyens de chauffe électriques peuvent être réalisés de toute façon appropriée dans la mesure où ils sont associés au réservoir d'eau. Selon une caractéristique de l'invention, les moyens de chauffe électriques comprennent au moins un élément chauffant électrique, de préférence, mais non nécessairement agencé dans un fond du réservoir d'eau.

Bien entendu, les différentes caractéristiques de l'invention évoquées ci-dessus peuvent être mises en oeuvre les unes avec les autres selon différentes combinaisons lorsqu'elles ne sont pas incompatibles ou exclusives les unes des autres.

Par ailleurs, diverses autres caractéristiques de l'invention ressortent de la description faite ci-dessous en référence aux dessins annexés qui montrent, à titre d'exemple non limitatif, une forme de réalisation de l'objet de l'invention.

La **fig. 1** illustre, en perspective partiellement arrachée, une forme de réalisation d'un appareil électroménager, selon l'invention, de cuisson à la vapeur d'aliments.

La **fig. 2** présente, en perspective partiellement arrachée, une partie des moyens de production de vapeur de l'appareil de cuisson selon la **fig. 1****.**

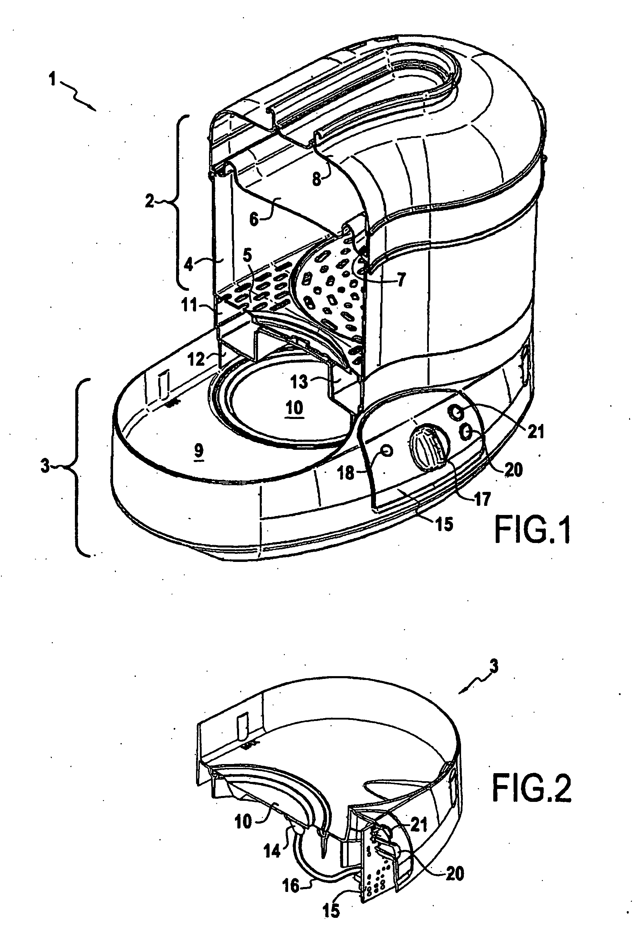

Un appareil électroménager de cuisson à la vapeur conforme à l'invention, tel qu'illustré à la **fig. 1** et désigné dans son ensemble par la référence **1,** comprend une enceinte de cuisson **2** disposée au-dessus de moyens **3** de production de vapeur. Selon l'exemple illustré aux **fig. 1 et 2****,** l'enceinte de cuisson **2** comprend un récipient principal **4** dont le fond **5** est perforé, un récipient additionnel **6** amovible présentant une zone annulaire périphérique pourvue d'orifices **7** de passage de vapeur, et un couvercle **8** amovible. L'enceinte de cuisson **2** est modulaire. En configuration réduite, le couvercle **8** peut reposer directement sur le récipient **4,** le récipient additionnel **6** n'étant pas utilisé. Le volume de l'enceinte de cuisson **2** en configuration complète comprenant le récipient **4,** le récipient additionnel **6** et le couvercle **8** est inférieur à 150% du volume de l'enceinte de cuisson en configuration réduite comprenant le récipient **4** et le couvercle **6,** et de préférence inférieur à 133%. Toujours selon l'exemple illustré, les moyens de production de vapeur **3** comprennent un réservoir d'eau **9** associé à des moyens de chauffe électriques **10.** L'appareil comporte également un bac **11** de récupération des jus, placé sous le fond **5** du récipient **4.** Le réservoir d'eau **9** comprend une paroi annulaire **12** qui est disposée sous le bac **11** et qui délimite une chambre de production de vapeur disposée au-dessus des moyens de chauffe électriques **10.** Le bac **11** est en outre pourvu d'une cheminée **13** de diffusion de la vapeur placée en relation avec la chambre de production de vapeur. Comme cela ressort plus particulièrement de la **fig. 2****,** les moyens de chauffe électriques **10** comprennent un élément chauffant électrique **14** agencé dans le fond du réservoir d'eau **9.** Selon l'exemple illustré, l'élément chauffant électrique **14** est disposé en relation avec une partie circulaire du fond du réservoir d'eau **9** comme le montrent les **fig. 1** et **2****.** Les moyens de production de vapeur **3** comprennent en outre des moyens **15** de commande et d'alimentation de l'élément chauffant électrique **14** auxquels ils sont raccordés par des conducteurs électriques **16.**

Il doit être remarqué que la constitution physique ou le mode de réalisation de l'appareil électroménager **1** ne rentre pas dans le cadre de la présente invention et ne nécessite donc pas une plus ample description, l'homme du métier disposant de toutes les connaissances nécessaires pour réaliser le récipient **4** ou les moyens de production de vapeur **3** en fonction des applications envisagées. L'homme du métier trouvera dans la demande FR 2 823 962, notamment, ou encore dans le brevet GB 2 198 631 des informations à cet égard. Il sera en outre remarqué que, selon l'exemple illustré, l'appareil électroménager ne comprend aucun moyen de détection de présence de vapeur ou détecteur de vapeur.

Selon l'invention, les moyens de commande **15** sont adaptés pour assurer un fonctionnement de l'élément chauffant électrique **14** selon au moins trois phases de fonctionnement consécutives et distinctes. Conformément à l'exemple illustré, les moyens de commande **15** comprennent, en tant que moyens de réglage externes d'un temps de fonctionnement, une minuterie mécanique dont le réglage est assuré au moyen d'une molette ou bouton pivotant **17.** Ainsi, un utilisateur de l'appareil électroménager **1** peut déterminer au moyen du bouton **17** la durée totale **T** de la cuisson des aliments qu'il aura préalablement disposés dans l'enceinte de cuisson **2.** Bien entendu, une telle minuterie pourrait être électronique et son réglage effectué au moyen de boutons poussoirs. Pour fixer les idées, considérons que la durée totale de la cuisson choisie est de 45 minutes. Une fois cette sélection effectuée, les moyens de commande **15** commencent une première phase de fonctionnement des moyens de chauffe électriques **10** au cours de laquelle ces derniers délivrent leur puissance moyenne nominale par exemple 2000 W environ. Cette première phase se déroule pendant une durée prédéfinie **D1,** de préférence supérieure à cinq minutes, et, selon l'exemple décrit, de l'ordre de six minutes environ. Il sera remarqué que les moyens de commandes **15** comprennent un témoin de fonctionnement tel qu'un voyant lumineux **18.**

Au terme de ces six minutes, les moyens de commande **15** enclenchent de manière automatique une deuxième phase de fonctionnement pour laquelle la puissance moyenne de chauffage des moyens de chauffe électriques **10** aura été réduite de moins de 50 % de la puissance moyenne de la première phase et selon l'exemple décrit de moins de 40 %. Ainsi, pendant la deuxième phase de fonctionnement, les moyens de chauffe électriques **10** délivrent une puissance moyenne valant 67,5% de la puissance de la première phase, soit 1350 W. La deuxième phase de fonctionnement possède également une durée **D2** de préférence supérieure à cinq minutes et, selon l'exemple illustré, la deuxième phase de fonctionnement durera six minutes, étant entendu que, selon l'invention, la deuxième phase de fonctionnement ne possède pas nécessairement une durée identique à celle de la première phase.

Au terme de la durée de la deuxième phase, les moyens de commande **15** engagent de manière automatique une troisième phase de fonctionnement au cours de laquelle les moyens de chauffe électriques **10** ou, selon l'exemple illustré, l'élément chauffant électrique **14** délivreront une puissance moyenne réduite de 34 % par rapport à la puissance moyenne de la deuxième phase, soit selon l'exemple illustré, une puissance moyenne de 900 W. Selon cet exemple, la puissance moyenne délivrée au cours de la troisième phase représente 66 % de la puissance moyenne de la deuxième phase soit 45 % de la puissance moyenne délivrée au cours de la première phase. Comme les deux phases de fonctionnement précédentes, la troisième phase de fonctionnement possède aussi une durée supérieure à cinq minutes et, selon l'exemple, une durée **D3** de quinze minutes. Il pourrait bien sûr être envisagé d'adopter une durée **D3** différente pour la troisième phase de fonctionnement mais de manière préférée la troisième phase présentera une durée **D3** supérieure ou égale à la somme **D1+D2** des durées des deux premières phases. Ainsi, cette durée **D3** plus longue permet soit de maintenir à température de cuisson de petites quantités d'aliments placées dans l'enceinte de cuisson, soit de poursuivre la montée en température pour des quantités plus importantes.

Lorsque le temps d'exécution de la troisième phase s'est écoulé, les moyens de commande **15** passent de manière automatique à une quatrième phase de fonctionnement au cours de laquelle l'élément chauffant électrique **14,** constitutif des moyens de chauffe électriques, délivre une puissance moyenne réduite de 28 % par rapport à la puissance moyenne délivrée lors de la troisième phase de fonctionnement. Ainsi, pendant cette quatrième phase de fonctionnement, et selon l'exemple illustré, les moyens de chauffe électriques **10** délivrent une puissance moyenne de 800 W. La puissance moyenne délivrée au cours de la quatrième phase représente donc 72 % de la puissance moyenne de la troisième phase ou 40 % de la puissance moyenne délivrée au cours de la première phase. La quatrième phase de fonctionnement se déroulera jusqu'à la fin de la durée totale de cuisson **T** choisie par l'utilisateur et durera donc dans le cas présent 18 minutes.

Les durées prédéfinies des trois premières phases de fonctionnement sont indépendantes de la durée totale de cuisson réglable par l'utilisateur. Toutefois lorsque la durée de cuisson programmée est réduite, les trois premières phases de fonctionnement ne sont pas nécessairement toutes utilisées et la durée effective de la dernière de ces phases de fonctionnement utilisée peut être plus réduite que la durée prédéfinie de ladite phase. La durée de la quatrième phase de fonctionnement n'est par contre pas prédéfinie et dépend de la durée totale de cuisson choisie par l'utilisateur. Il apparaît donc qu'à la différence des trois premières phases de fonctionnement, la durée de la quatrième phase de fonctionnement dépend de la durée totale de cuisson choisie par l'utilisateur. Il est à noter que, si l'utilisateur avait choisi une durée totale de cuisson inférieure à la durée cumulée des trois premières phases, en l'espèce 27 minutes, alors les moyens de commande n'auraient pas lancé la quatrième phase de fonctionnement. En effet, selon l'exemple illustré, les moyens de commande sont adaptés pour interrompre l'alimentation des moyens de chauffe électriques **10** indépendamment de la phase de fonctionnement en cours de déroulement.

Selon l'exemple illustré, les moyens de commande **15** comprennent un organe de commande **20,** tel qu'un interrupteur, permettant à l'utilisateur de l'appareil électroménager **1** de mettre en oeuvre un maintien au chaud en fin de cuisson. Ainsi, lorsque l'utilisateur a sélectionné le maintien au chaud, au terme de la durée totale de cuisson **T,** les moyens de commande **15** démarrent un cycle de maintien au chaud qui comprend tout d'abord une phase, dite de refroidissement partiel, d'une durée prédéfinie comprise entre 10 min et 20 min, et de préférence comprise entre 12 min et 16 min, par exemple 14 min pendant laquelle les moyens de chauffe électriques **10** ne sont pas alimentés. La phase de refroidissement partiel est ensuite suivie d'une phase, dite de maintien au chaud, pendant laquelle la puissance moyenne délivrée par les moyens de chauffe électriques possède une valeur comprise entre 20% et 30% et de préférence de l'ordre de 25% de la puissance moyenne délivrée par l'élément chauffant pendant la première phase de fonctionnement. Selon l'exemple illustré, les moyens de chauffe électriques **10** délivrent pendant la phase de maintien au chaud une puissance de l'ordre de 400 W. Cette puissance est, par exemple, obtenue par un hachage de l'alimentation de l'élément chauffant électrique **14.** La phase de maintien au chaud est alors constituée par une alternance de temps de chauffe pendant lesquels l'élément chauffant électrique **14** est alimenté et de temps de non-chauffe ou d'extinction pendant lesquels l'élément chauffant électrique n'est pas alimenté. Lorsque l'élément chauffant électrique possède une puissance nominale de 2000 W, il sera par exemple adopté un temps de chauffe de 75 secondes suivi d'un temps d'extinction de 300 secondes. Une période complète possède donc une durée de 375 secondes, l'élément chauffant électrique **14** étant en marche pendant 20% de la période, il est bien délivré une puissance moyenne de 400W. De manière préférée, la durée de déroulement de la phase de refroidissement sera choisie pour être différente de la durée de chaque temps d'extinction de la phase de maintien au chaud. De manière plus particulièrement préférée, la durée de déroulement de la phase de refroidissement sera choisie pour être supérieure à la durée de chaque temps de d'extinction, et de préférence supérieure à 1,5 la durée de chaque temps de d'extinction. Par ailleurs, les moyens de commande seront de préférence adaptés pour faire débuter la phase de maintien au chaud par un temps de chauffe.

Afin d'éviter un fonctionnement permanent de l'appareil électroménager **1** en cas d'oubli, les moyens de commande **15** sont adaptés pour faire fonctionner les moyens de chauffe électriques **10** en mode de maintien au chaud pendant une durée maximum de 45 minutes. Dans le cas de la sélection du maintien au chaud, la durée de cuisson **T** correspond au temps de fonctionnement ou à la durée totale des phases de fonctionnement précédant l'avant dernière phase ici la phase de refroidissement partiel. En revanche, en l'absence de sélection du maintien au chaud, la durée de cuisson **T** correspond au temps de fonctionnement ou à la durée totale de l'ensemble des phases de fonctionnement. Il sera remarqué que dans les deux cas précédents, à savoir sans maintien au chaud et avec maintien au chaud, le réglage de la durée de cuisson n'affecte pas la durée de déroulement prédéfinie de l'avant dernière phase de fonctionnement, respectivement la troisième phase de chauffage et la phase de refroidissement partiel.

Selon l'exemple illustré, les moyens de commande **15** comprennent également un organe de commande **21,** tel qu'un interrupteur, permettant à l'utilisateur de l'appareil électroménager **1** de lancer, à tout moment pendant la cuisson ou pendant le maintien au chaud, une séquence de relance du chauffage. Cette séquence de relance du chauffage possède une durée inférieure ou égale à la durée de la première phase de fonctionnement et pendant laquelle les moyens de chauffe électriques délivrent une puissance moyenne comprise entre 80 % et 100 % de la puissance moyenne délivrée par l'élément chauffant pendant la première phase de fonctionnement. Selon l'exemple illustré, la séquence de relance aura une durée de l'ordre de quatre minutes et les moyens de chauffe électriques y délivreront une puissance moyenne de 2000 W.

Selon l'invention, la modulation de la puissance des moyens de chauffe électriques **10** peut être réalisée de toute façon appropriée. Selon l'exemple illustré et afin de réduire les coûts impliqués par cette régulation, il est mis en oeuvre un hachage ou découpage de l'alimentation des moyens de chauffe électriques et donc de l'élément chauffant électrique **14.** Afin de tenir compte de ce hachage, au sens de l'invention, la puissance moyenne des moyens de chauffes électriques au cours d'une phase de fonctionnement correspond à la puissance moyenne calculée sur la durée totale de cette phase de fonctionnement ou sur une période complète de hachage de cette phase de fonctionnement, une période complète de hachage étant constituée d'un temps de chauffe ou marche et d'un temps d'extinction.

Par ailleurs, selon l'invention, le nombre de phases de fonctionnement, la durée de celles-ci et la puissance moyenne délivrée au cours de ces dernières peuvent être modifiées en fonction notamment des caractéristiques structurelles de l'appareil électroménager **1** dans la mesure où il est mis en oeuvre pour la cuisson au moins trois phases de fonctionnement d'une durée minimale de deux minutes et de préférence d'au moins cinq minutes faisant intervenir à chaque changement de phase de fonctionnement une réduction de la puissance moyenne délivrée par les moyens de chauffe électriques inférieure à 50 % de la puissance délivrée lors de la phase précédente.

Ainsi, selon une autre forme de réalisation, les moyens de commande **15** sont adaptés pour mettre en oeuvre quatre phases de fonctionnement avec les paramètres suivants :
■ première phase d'une durée de neuf minutes et de puissance moyenne délivrée 2000 W,
■ deuxième phase d'une durée de trois minutes et de puissance moyenne délivrée 1000 W
■ troisième phase d'une durée de trois minutes et de puissance moyenne délivrée 800 W.
■ quatrième phase de puissance moyenne délivrée de 660 W.

Bien entendu, diverses autres modifications peuvent être apportées à l'invention dans le cadre des revendications.

## Revendications

1. Appareil électroménager de cuisson à la vapeur d'aliments comprenant au moins une enceinte de cuisson **(2)** modulaire comportant au moins un récipient principal **(4)** et au moins un couvercle **(8)** amovible adaptable sur le dessus du récipient principal, des moyens **(3)** de production de vapeur comprenant des moyens de chauffe électriques **(10)** associés à un réservoir d'eau **(9)** et des moyens **(15)** de commande et d'alimentation des moyens de chauffe électriques **(10)** qui comprennent des moyens externes **(17)** de réglage, par un utilisateur, d'un temps de fonctionnement, **caractérisé en ce que** les moyens de chauffe électriques **(10)** comprennent au moins un élément chauffant électrique **(14)** agencé dans le fond du réservoir d'eau, et **en ce que** les moyes de commande **(15)** ne comprennent aucun moyen de détection de vapeur et sont adaptés pour assurer le fonctionnement des moyens de chauffe électriques **(10)** selon au moins un cycle de fonctionnement comprenant au moins trois phases de fonctionnement consécutives dans les conditions suivantes :
■ les trois premières phases de fonctionnement au moins possèdent chacune une durée supérieure ou égale à deux minutes et de préférence supérieure ou égale à cinq minutes,
■ l'avant-dernière phase de fonctionnement possède une durée de déroulement prédéfinie indépendante des moyens externes de réglage **(17)** et le passage de l'avant-dernière phase de fonctionnement à la dernière phase de fonctionnement s'effectue de manière automatique au terme de la durée de déroulement de l'avant-dernière phase,
■ la puissance moyenne délivrée par les moyens de chauffe électriques au cours de l'une des phases de fonctionnement suivant la première phase de fonctionnement est strictement inférieure à la puissance moyenne délivrée par les moyens de chauffe électriques au cours de la première phase de fonctionnement,
■ et la puissance moyenne délivrée par les moyens de chauffe électriques au cours de la dernière phase de fonctionnement est non nulle.

2. Appareil électroménager de cuisson à la vapeur selon la revendication 1, **caractérisé en ce que** les trois premières phases de fonctionnement possèdent une durée de déroulement prédéfinie, le passage de la première phase de fonctionnement à la deuxième phase s'effectuant de manière automatique au terme de la durée de déroulement de la première phase et le passage de la deuxième phase de fonctionnement à la troisième phase s'effectuant de manière automatique au terme de la durée de déroulement de la deuxième phase.

3. Appareil électroménager de cuisson à la vapeur selon la revendication 2, **caractérisé en ce qu'**à partir de la deuxième phase de fonctionnement, la puissance moyenne délivrée par les moyens de chauffe électriques, au cours d'une phase de fonctionnement, est réduite d'une valeur inférieure ou égale à 50 % et, de préférence, comprise entre 25 % et 45 % de la valeur de la puissance moyenne délivrée par les moyens de chauffe électriques au cours de la phase de fonctionnement précédente.

4. Appareil électroménager de cuisson à la vapeur selon l'une des revendications 1 à 3, **caractérisé en ce que** les deux premières phases possèdent une durée prédéfinie inférieure ou égale à 10 min et de préférence inférieure ou égale à 7 min.

5. Appareil électroménager de cuisson à la vapeur selon l'une des revendications 1 à 4, **caractérisé en ce que** la durée prédéfinie D3 de la troisième phase de fonctionnement est supérieure ou égale à la somme des durées prédéfinies D1 et D2 des deux premières phases de fonctionnement.

6. Appareil électroménager de cuisson à la vapeur selon l'une des revendications 1 à 5, **caractérisé en ce que** le cycle de fonctionnement comprend au moins quatre phases de fonctionnement et **en ce que** :
■ la puissance moyenne délivrée par les moyens de chauffe électriques, au cours de la deuxième phase de fonctionnement, est comprise entre 50 % et 65 % de la puissance moyenne délivrée par les moyens de chauffe électriques au cours de la première phase de fonctionnement,
■ la puissance moyenne délivrée par les moyens de chauffe électriques, au cours de la troisième phase de fonctionnement, est comprise entre 45 % et 50 % de la puissance moyenne délivrée par les moyens de chauffe électriques au cours de la première phase de fonctionnement,
■ la puissance moyenne délivrée par les moyens de chauffe électriques, au cours de la quatrième phase de fonctionnement, est comprise entre 30 % et 40 % de la puissance moyenne délivrée par les moyens de chauffe électriques au cours de la première phase de fonctionnement.

7. Appareil électroménager de cuisson à la vapeur selon l'une des revendications 1 à 6, **caractérisé en ce que** les moyens de commande comprennent un organe de commande (21) accessible à un utilisateur pour déclencher une séquence de fonctionnement, dite de relance, d'une durée inférieure ou égale à la durée de la première phase de fonctionnement et pendant laquelle les moyens de chauffe électriques délivrent une puissance moyenne comprise entre 80 % et 100 % de la puissance moyenne délivrée par les moyens de chauffe électriques pendant la première phase de fonctionnement.

8. Appareil électroménager de cuisson à la vapeur selon l'une des revendications 1 à 7, **caractérisé en ce que** les moyens de commande :
■ comprennent, en tant que moyens de réglage d'un temps de fonctionnement, une minuterie (17) réglable par un utilisateur pour déterminer, en fonction du contenu de l'enceinte de cuisson, la durée totale d'un premier cycle de fonctionnement, dit cycle de cuisson,
■ et sont adaptés pour, au terme du cycle de cuisson, soit interrompre l'alimentation de l'élément chauffant, soit engager un cycle de fonctionnement des moyens de chauffe électriques assurant un maintien au chaud du contenu de l'enceinte de cuisson.

9. Appareil électroménager de cuisson à la vapeur selon la revendication 8, **caractérisé en ce que** le cycle de maintien au chaud comprend une phase, dite de refroidissement partiel, d'une durée prédéfinie comprise entre 10 min et 20 min, et de préférence comprise entre 12 min et 16 min, pendant laquelle l'alimentation des moyens de chauffe électriques est interrompue, la phase de refroidissement partiel étant suivie d'une phase dite de maintien pendant laquelle la puissance moyenne délivrée par les moyens de chauffe électriques possède une valeur comprise entre 20% et 30% et de préférence de l'ordre de 25 % de la puissance moyenne délivrée par les moyens de chauffe électriques pendant la première phase de fonctionnement.

10. Appareil électroménager de cuisson à la vapeur selon la revendication 8 ou 9, **caractérisé en ce que** pendant la phase de maintien au chaud l'alimentation des moyens de chauffe électriques **(10)** est hachée de manière à être constituée par une alternance de temps de chauffe pendant lesquels les moyens de chauffe électriques **(10)** sont alimentés et de temps d'extinction pendant lesquels les moyens de chauffe électriques **(10)** ne sont pas alimentés, la durée de chaque temps d'extinction étant différente de la durée de la phase de refroidissement.

11. Appareil électroménager de cuisson à la vapeur selon la revendication 10, **caractérisé en ce que** la durée de chaque temps d'extinction est supérieure à la durée de la phase de refroidissement et de préférence supérieure à 1,5 fois la durée de la phase de refroidissement.

12. Appareil électroménager de cuisson à la vapeur selon la revendication 8 à 11, **caractérisé en ce que** les moyens de commande comprennent un organe de commande **(20)** accessible à un utilisateur pour activer et/ou désactiver l'engagement du cycle de maintien au chaud au terme du cycle de cuisson.

13. Appareil électroménager de cuisson à la vapeur selon l'une des revendications 1 à 12, **caractérisé en ce que** :
■ l'avant-dernière phase de fonctionnement présente une durée prédéfinie comprise entre 10 min et 20 min, et de préférence comprise entre 12 min et 16 min, pendant laquelle l'alimentation des moyens de chauffe électriques est interrompue,
■ pendant la dernière phase de fonctionnement, la puissance moyenne délivrée par les moyens de chauffe électriques possède une valeur comprise entre 20% et 30% et de préférence de l'ordre de 25 % de la puissance moyenne délivrée par les moyens de chauffe électriques pendant la première phase de fonctionnement.

14. Appareil électroménager de cuisson à la vapeur selon l'une des revendications 1 à 13, **caractérisé en ce que** l'enceinte de cuisson **(2)** comprend un récipient additionnel **(6)** amovible disposé sur le récipient principal **(4)** et un couvercle **(8)** amovible adaptable sur le dessus du récipient additionnel **(6),** le récipient additionnel **(6)** présentant un volume inférieur ou égal à 50%, et de préférence inférieur ou égal à 33%, du volume défini par le récipient principal **(4)** recouvert par le couvercle **(6).**

## Claims

1. An electrical appliance for cooking foodstuffs with steam comprising at least one modular cooking enclosure (2) including at least one main container (4) and at least one removable lid (8) which may be adapted on the top of the main container, means (3) for producing steam comprising electrical heating means (10) associated with a water reservoir (9) and means (15) for controlling and powering electrical heating means (10) which comprise external means (17) for adjustment of an operating time by a user, **characterized in that** the electrical heating means (10) comprise at least one electrical heating element (14) arranged in the bottom of the water reservoir, and **in that** the control means (15) do not comprise any means for detecting steam and are adapted so as to ensure operation of the electrical heating means (10) according to at least one operating cycle comprising at least three consecutive operating phases under the following conditions:
■ the first three operating phases each at least have a duration greater than or equal to two minutes and preferably greater than or equal to five minutes,
■ the last but one operating phase has a predefined completion time independent of the external adjustment means (17) and switching from the last but one operating phase to the last operating phase is carried out automatically at the end of the completion time of the last but one phase,
■ the average power delivered by the electrical heating means during one of the operating phases following the first operating phase is strictly less than the average power delivered by the electrical heating means during the first operating phase,
■ and the average power delivered by the electrical heating means during the last operating phase is non-zero.

2. A steam-cooking electrical appliance according to claim 1, **characterized in that** the first three operating phases have a predefined completion time, the switching from the first operating phase to the second phase being carried out automatically at the end of the completion time of the first phase and the switching from the second operating phase to the third phase being carried out automatically at the end of the completion time of the second phase.

3. The steam-cooking electrical appliance according to claim 2, **characterized in that** from the second operating phase, the average power delivered by the electrical heating means, during an operating phase, is reduced by a value of less than or equal to 50% and, preferably, comprised between 25% and 45% of the value of the average power delivered by the electrical heating means during the previous operating phase.

4. The steam-cooking electrical appliance according to any of claims 1 to 3, **characterized in that** the first two phases have a predefined duration of less than or equal to 10 min and preferably of less than or equal to 7 min.

5. The steam-cooking electrical appliance according to any of claims 1 to 4, **characterized in that** the predefined duration D3 of the third operating phase is greater than or equal to the sum of the predefined durations D1 and D2 of the first two operating phases.

6. The steam-cooking electrical appliance according to any of claims 1 to 5, **characterized in that** the operating cycle comprises at least four operating phases and **in that**:
■ the average power delivered by the electrical heating means during the second operating phase is comprised between 50% and 65% of the average power delivered by the electrical heating means during the first operating phase,
■ the average power delivered by the electrical heating means during the third operating phase is comprised between 45% and 50% of the average power delivered by the electrical heating means during the first operating phase,
■ the average power delivered by the electrical heating means during the fourth operating phase is comprised between 30% and 40% of the average power delivered by the electrical heating means during the first operating phase.

7. The steam-cooking electrical appliance according to any of claims 1 to 6, **characterized in that** the control means comprise a control unit (21) accessible to a user for triggering an operating sequence, a so-called re-launching sequence, with a duration of less than or equal to the duration of the first operating phase and during which the electrical heating means deliver an average power comprised between 80% and 100% of the average power delivered by the electrical heating means during the first operating phase.

8. The steam-cooking electrical appliance according to any of claims 1 to 7, **characterized in that** the control means:
■ comprise, as means for adjusting an operating time, a timer (17) adjustable by a user in order to determine, depending on the contents of the cooking enclosure, the total duration of a first operating cycle, a so-called cooking cycle,
■ and are adapted for, at the end of the cooking cycle, either interrupting the powering of the heating element, or for engaging a cycle for operating electrical heating means ensuring that the contents of the cooking enclosure are kept warm.

9. The steam-cooking electrical appliance according to claim 8, **characterized in that** the warm-keeping cycle comprises a phase, a so-called partial cooling phase, with a predefined duration comprised between 10 min and 20 min, and preferably comprised between 12 min and 16 min, during which the powering of the electrical heating means is interrupted, the partial cooling phase being followed by a so-called maintaining phase during which the average power delivered by the electrical heating means has a value comprised between 20% and 30% and preferably of the order of 25% of the average power delivered by the electrical heating means during the first operating phase.

10. The steam-cooking electrical appliance according to claim 8 or 9, **characterized in that** during the warm-keeping phase, the powering of the electrical heating means (10) is broken up in order to be formed by an alternation of heating- on times during which the electrical heating means (10) are powered and of heating-off times during which the electrical heating means (10) are not powered, the duration of each heating-off time being different from the duration of the cooling phase.

11. The steam-cooking electrical appliance according to claim 10, **characterized in that** the duration of each heating-off time is greater than the duration of the cooling phase and preferably greater than 1.5 times the duration of the cooling phase.

12. The steam-cooking electrical appliance according to claim 8 to 11, **characterized in that** the control means comprise a control unit (20) accessible to a user for enabling and/or disabling the engagement of the warm-keeping cycle at the end of the cooling cycle.

13. The steam-cooking electrical appliance according to any of claims 1 to 12, **characterized in that**:
■ the last but one operating phase has a predefined duration comprised between 10 min and 20 min, and preferably comprised 12 min and 16 min, during which the powering of the electrical heating means is interrupted,
■ during the last operating phase, the average power delivered by the electrical heating means has a value comprised between 20% and 30% and is preferably of the order of 25% of the average power delivered by the electrical heating means during the first operating phase.

14. The steam-cooking electrical appliance according to any of claims 1 to 13, **characterized in that** the cooking enclosure (2) comprises an additional removable container (6) positioned on the main container (4) and a removable lid (8) which may be adapted on the top of the additional container (6), the additional container (6) having a volume of less than or equal to 50%, and preferably less than or equal to 33% of the volume defined by the main container (4) covered by the lid (6).

## Patentansprüche

1. Haushaltsgerät zum Dampfgaren von Lebensmitteln, umfassend wenigstens einen modular aufgebauten Garraum (2), der wenigstens einen Hauptbehälter (4) und wenigstens einen abnehmbaren, an der Oberseite des Hauptbehälters anbringbaren Deckel (8) aufweist, Dampferzeugungsmittel (3), die elektrische Heizmittel (10), welche einem Wasserbehälter (9) zugeordnet sind, sowie Mittel (15) zum Betätigen und Versorgen der elektrischen Heizmittel (10) umfassen, die außenliegende Mittel (17) zum Einstellen einer Betriebszeit durch einen Benutzer aufweisen, **dadurch gekennzeichnet, daß** die elektrischen Heizmittel (10) wenigstens ein elektrisches Heizelement (14) umfassen, das im Boden des Wasserbehälters angeordnet ist, und daß die Betätigungsmittel (15) keinerlei Dampferkennungsmittel umfassen und ausgebildet sind, um den Betrieb der elektrischen Heizmittel (10) entsprechend wenigstens einem Betriebszyklus mit wenigstens drei aufeinanderfolgenden Betriebsphasen unter den folgenden Bedingungen sicherzustellen:
- wenigstens die drei ersten Betriebsphasen haben jeweils eine Zeitdauer von mehr als oder gleich zwei Minuten und vorzugsweise von mehr als oder gleich fünf Minuten,
- die vorletzte Betriebsphase hat eine vordefinierte, von den außenliegenden Einstellmitteln (17) unabhängige Ablaufzeit, und der Übergang von der vorletzten Betriebsphase zur letzten Betriebsphase erfolgt automatisch am Ende der Ablaufzeit der vorletzten Phase,
- die durchschnittliche Leistung, die durch die elektrischen Heizmittel im Laufe einer der auf die erste Betriebsphase folgenden Betriebsphasen bereitgestellt wird, ist unbedingt geringer als die durchschnittliche Leistung, die durch die elektrischen Heizmittel im Laufe der ersten Betriebsphase bereitgestellt wird,
- und die durchschnittliche Leistung, die durch die elektrischen Heizmittel im Laufe der letzten Betriebsphase bereitgestellt wird, ist ungleich Null.

2. Haushaltsgerät zum Dampfgaren nach Anspruch 1, **dadurch gekennzeichnet, daß** die drei ersten Betriebsphasen eine vordefinierte Ablaufzeit haben, wobei der Übergang von der ersten Betriebsphase zur zweiten Phase automatisch am Ende der Ablaufzeit der ersten Phase und der Übergang von der zweiten Betriebsphase zur dritten Phase automatisch am Ende der Ablaufzeit der zweiten Phase erfolgt.

3. Haushaltsgerät zum Dampfgaren nach Anspruch 2, **dadurch gekennzeichnet, daß** ab der zweiten Betriebsphase die durch die elektrischen Heizmittel im Laufe einer Betriebsphase bereitgestellte durchschnittliche Leistung um einen Wert kleiner oder gleich 50 % und vorzugsweise zwischen 25 % und 45 % des Wertes der durch die elektrischen Heizmittel im Laufe der vorausgehenden Betriebsphase bereitgestellten durchschnittlichen Leistung verringert wird.

4. Haushaltsgerät zum Dampfgaren nach einem der Ansprüche 1 bis 3, **dadurch gekennzeichnet, daß** die beiden ersten Phasen eine vordefinierte Zeitdauer von weniger als oder gleich 10 Min. und vorzugsweise von weniger als oder gleich 7 Min. haben.

5. Haushaltsgerät zum Dampfgaren nach einem der Ansprüche 1 bis 4, **dadurch gekennzeichnet, daß** die vordefinierte Zeitdauer D3 der dritten Betriebsphase größer als oder gleich der Summe aus den vordefinierten Zeitdauern D1 und D2 der beiden ersten Betriebsphasen ist.

6. Haushaltsgerät zum Dampfgaren nach einem der Ansprüche 1 bis 5, **dadurch gekennzeichnet, daß** der Betriebszyklus wenigstens vier Betriebsphasen umfaßt und daß:
- die durch die elektrischen Heizmittel während der zweiten Betriebsphase bereitgestellte durchschnittliche Leistung zwischen 50 % und 65 % der durch die elektrischen Heizmittel im Laufe der ersten Betriebsphase bereitgestellten durchschnittlichen Leistung beträgt,
- die durch die elektrischen Heizmittel während der dritten Betriebsphase bereitgestellte durchschnittliche Leistung zwischen 45 % und 50 % der durch die elektrischen Heizmittel im Laufe der ersten Betriebsphase bereitgestellten durchschnittlichen Leistung beträgt,
- die durch die elektrischen Heizmittel während der vierten Betriebsphase bereitgestellte durchschnittliche Leistung zwischen 30 % und 40 % der durch die elektrischen Heizmittel im Laufe der ersten Betriebsphase bereitgestellten durchschnittlichen Leistung beträgt.

7. Haushaltsgerät zum Dampfgaren nach einem der Ansprüche 1 bis 6, **dadurch gekennzeichnet, daß** die Betätigungsmittel ein Betätigungsorgan (21) umfassen, das für einen Benutzer zugänglich ist, um eine Betriebsfolge, sogenannte Wiederanlaufsequenz auszulösen, deren Dauer geringer als oder gleich der Dauer der ersten Betriebsphase ist und im Laufe derer die elektrischen Heizmittel eine durchschnittliche Leistung zwischen 80 % uns 100 % der durch die elektrischen Heizmittel während der ersten Betriebsphase bereitgestellten durchschnittlichen Leistung liefern.

8. Haushaltsgerät zum Dampfgaren nach einem der Ansprüche 1 bis 7, **dadurch gekennzeichnet, daß** die Betätigungsmittel:
- als Mittel zum Einstellen einer Betriebszeit eine Zeitschaltuhr (17) umfassen, die durch einen Benutzer einstellbar ist, um in Abhängigkeit des Inhalts des Garraumes die Gesamtdauer eines ersten Betriebszyklus, sogenannten Garzyklus festzulegen,
- und ausgebildet sind, um am Ende des Garzyklus entweder die Versorgung des Heizelements zu unterbrechen oder einen Betriebszyklus der elektrischen Heizmittel einzuleiten, der ein Warmhalten des Inhalts des Garraumes sicherstellt.

9. Haushaltsgerät zum Dampfgaren nach Anspruch 8, **dadurch gekennzeichnet, daß** der Warmhaltezyklus eine sogenannte Teilabkühlphase mit einer vordefinierten Dauer von 10 Min. bis 20 Min. und vorzugsweise von 12 Min. bis 16 Min. umfaßt, im Laufe derer die Versorgung der elektrischen Heizmittel unterbrochen ist, wobei sich an die Teilabkühlphase eine sogenannte Haltephase anschließt, im Laufe derer die durch die elektrischen Heizmittel bereitgestellte durchschnittliche Leistung einen Wert zwischen 20 % und 30 % und vorzugsweise in der Größenordnung von 25 % der durch die elektrischen Heizmittel während der ersten Betriebsphase bereitgestellten durchschnittlichen Leistung aufweist.

10. Haushaltsgerät zum Dampfgaren nach Anspruch 8 oder 9, **dadurch gekennzeichnet, daß** während der Warmhaltephase die Versorgung der elektrischen Heizmittel (10) zerhackt ist, so daß sie aus einer Wechselfolge von Heizzeiten, in denen die elektrischen Heizmittel (10) versorgt werden, und von Abschaltzeiten, in denen die elektrischen Heizmittel (10) nicht versorgt werden, besteht, wobei die Dauer einer jeden Abschaltzeit von der Dauer der Abkühlphase abweicht.

11. Haushaltsgerät zum Dampfgaren nach Anspruch 10, **dadurch gekennzeichnet, daß** die Dauer einer jeden Abschaltzeit länger als die Dauer der Abkühlphase ist und vorzugsweise mehr als das 1,5-fache der Dauer der Abkühlphase beträgt.

12. Haushaltsgerät zum Dampfgaren nach Anspruch 8 bis 11, **dadurch gekennzeichnet, daß** die Betätigungsmittel ein Betätigungsorgan (20) umfassen, das für einen Benutzer zugänglich ist, um das Einleiten des Warmhaltezyklus am Ende des Garzyklus zu aktivieren und/oder zu deaktivieren.

13. Haushaltsgerät zum Dampfgaren nach einem der Ansprüche 1 bis 12, **dadurch gekennzeichnet, daß**:
- die vorletzte Betriebsphase eine vordefinierte Zeitdauer von 10 Min. bis 20 Min. und vorzugsweise von 12 Min. bis 16 Min. hat, während derer die Versorgung der elektrischen Heizmittel unterbrochen ist,
- während der letzten Betriebsphase die durch die elektrischen Heizmittel bereitgestellte durchschnittliche Leistung einen Wert zwischen 20 % und 30 % und vorzugsweise in der Größenordnung von 25 % der durch die elektrischen Heizmittel während der ersten Betriebsphase bereitgestellten durchschnittlichen Leistung hat.

14. Haushaltsgerät zum Dampfgaren nach einem der Ansprüche 1 bis 13, **dadurch gekennzeichnet, daß** der Garraum (2) einen zusätzlichen abnehmbaren Behälter (6), der auf dem Hauptbehälter (4) angeordnet ist, sowie einen abnehmbaren, auf der Oberseite des zusätzlichen Behälters (6) anbringbaren Deckel (8) umfaßt, wobei der zusätzliche Behälter (6) ein Volumen aufweist, das kleiner als oder gleich 50 % und vorzugsweise kleiner als oder gleich 33 % des durch den mit dem Deckel (6) abgedeckten Hauptbehälter (4) definierten Volumens ist bzw. beträgt.
